# EUROPEAN PATENT SPECIFICATION

(11) **EP 0 550 504 B1**
(45) Date of publication and mention of the grant of the patent: **03.05.1995**
(21) Application number: 91916484.8
(22) Date of filing: 23.09.1991
(51) Int. Cl.: G09B 9/00

(54) **FIRE SIMULATOR**
BRANDSIMULATOR
SIMULATEUR D'INCENDIE

(30) Priority: 21.09.1990 FI 904649
(43) Date of publication of application: 14.07.1993
(73) Proprietor: TEMARTEC KY, SF-90241 Oulu (FI)
(72) Inventor: KARVONEN, Esa, SF-90310 Oulu (FI)
(74) Representative: Füchsle, Klaus, Dipl.-Ing.
(86) International application number: FI9100290
(87) International publication number: WO9205531

(56) References cited:
- EP-A- 0 146 465
- DE-A- 2 951 624
- US-A- 4 526 548
- US-A- 4 861 270

## Description

The invention relates to a fire simulator intended primarily for the training of firemen, the said simulator comprising a training space, which is, for example a movable container, inside which it is attempted to create conditions in a training situation which are at least to some extent similar to a fire situation. DE-A-2 951 624 describes such a fire simulator, which corresponds to the first part of claim 1.

The use of a smoke diving track in a training situation is an essential part of the training of firemen. It is necessary to practise difficult situations and tough conditions because in practical fire fighting firemen must know how to act in all kinds of difficult and unpredictable situations. The smoke diving track can, therefore, be furnished with labyrinths and unexpected obstacles, with which the fireman must be able to cope even in thick, opaque smoke.

A smoke diving track is usually built inside a fire station or training centre building, as an integral part of it. The use of such a track is, however, very limited since it cannot easily be modified. In addition, fire extinguishing cannot be practised in any form on such premises. The object of the present invention is, therefore, to achieve a new type of fire simulator, whose range of use is considerably wider than that of known simulators.

According to the present invention the fire simulator comprises at least two parts, the first of which is the actual training space which can be closed, and the second of which is a separate smoke diving cage track which can be placed inside the first part during the transportation of the fire simulator, and when the object of training is smoke diving.

By means of the present invention a very versatile training space is achieved for practising not only smoke diving but also a variety of other extinguishing tasks. When the cage track is removed from the simulator, it is possible to practise the use of clearing equipment, smoke ventilation, rescue operations, and extinguishing practice concerning different materials, all in the same space.

The invention is described below in detail, with reference to the appended drawings, in which
- Figure 1: shows the fire simulator combination relating to the invention as seen from the side.
- Figure 2: shows the fire simulator shown in figure 1 as seen from above.
- Figure 3: shows the fire simulator shown in figure 1 as seen from the end.
- Figure 4: corresponds to figure 3 and shows a second embodiment.
- Figure 5: shows the fire simulator shown in figure 4 as seen from the side.
- Figure 6: shows the fire simulator shown in figure 4 as seen from above.
- Figure 7: shows a detail of the fire simulator shown in figure 1.
- Figure 8: corresponds to figure 7 as seen from another direction.
- Figure 9: corresponds to figure 7 and shows a second embodiment.
- Figure 10: shows the detail of figure 9 as seen from a different direction.
- Figure 11: shows a detail of the cage construction as seen from the side.
- Figure 12: shows the detail of figure 11 as seen from above.
- Figure 13: corresponds to figure 11 and shows a second embodiment.
- Figure 14: shows the detail of figure 13 as seen from above.
- Figure 15: corresponds to figure 11 and shows a third embodiment.
- Figure 16: shows a detail of figure 15 as seen from above.
- Figure 17: shows a detail of the cage construction provided with identification markings.
- Figure 18: shows the marking system of the cage construction.

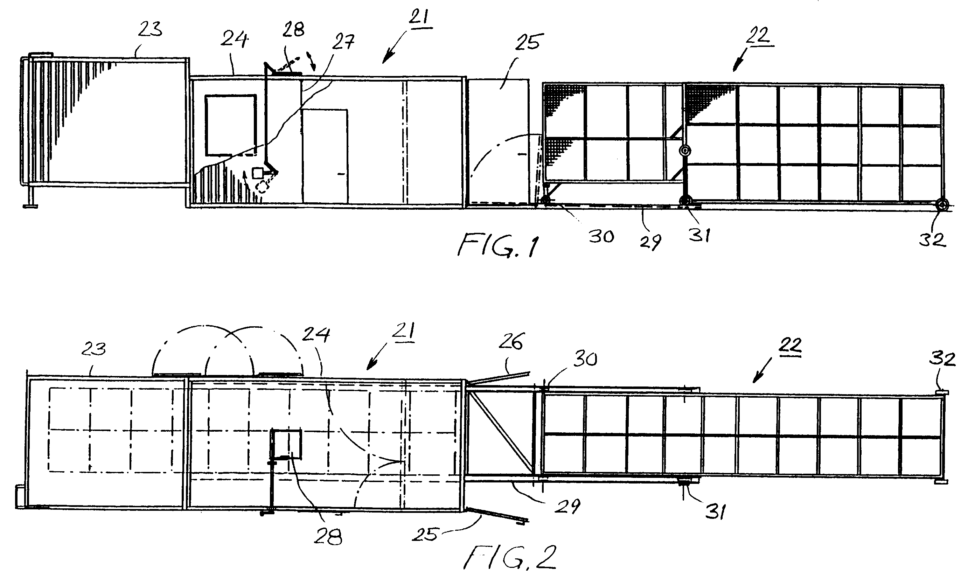

Figure 1 shows the fire simulator combination as seen from the side. This fire simulator comprises two main parts, which are an apartment fire simulator 21 and a smoke diving track 22. The apartment fire simulator 21 consists of a container which can be opened and closed at its end, and the smoke diving track 22 consists of a cage track which fits inside the container.

The apartment fire simulator container 21 also consists of two parts. The left-hand part 23 in figure 1 is the fire chamber which can be, for example, lined with different ignitable interior decoration materials. In the right-hand part 24 the control of fire gases, for example, can be practised. For this purpose this part is equipped e.g. with smoke prevention fences 27 mounted on the ceiling and with a fire control damper 28. The floor and ceiling levels of the container 21 form a step between the parts 23 and 24.

The lower part of the cage track 22 forms a step to correspond to the shape of the flocr level of the container part 21, and it is dimensioned in length and height to be just the right size to fit inside the container part 21. The cage track 22 is moved inside the container part 21 through the doors 25 and 26 opening at the end of the container. Once the cage is inside, the doors can be closed.

The fact that these modules are movable has many advantages. Firstly, since the container part 21 is located out-of-doors and is itself made of non-flammable material, it is well suited for practising the handling of the materials which burn in real situations and during training. Secondly, thanks to the separate cage track module 22, the same apartment fire simulator can be converted quickly and easily into a smoke diving track simply by moving the cage track 22 inside the apartment fire simulator 21.

To ensure the quick and easy changing of training conditions, the cage track 22 is provided with wheels 31, 32 and 33, wheels 30 and 31 being placed on rails 29. The cage track can be moved easily in and out of the container 21 on these rails when required. The rails 29 can also be provided with cogging and the wheels of the cage track with corresponding cogs so that the horizontal movement of the cage track will function accurately even in bad weather conditions. Such solutions are shown in the figures presented below.

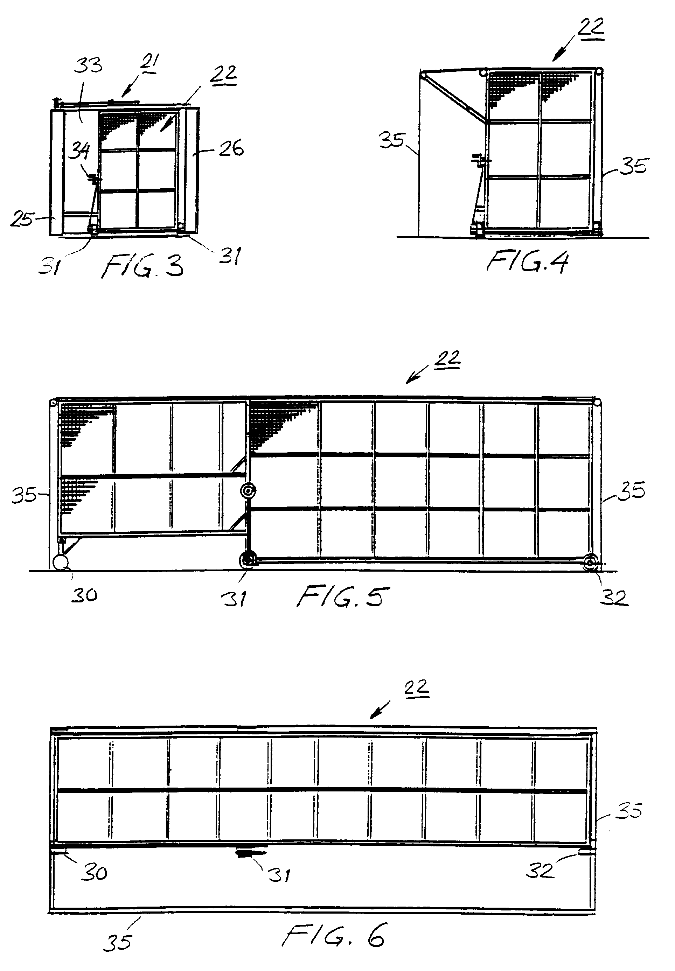

Figure 2 shows the fire simulator shown in figure 1 as seen from above. The figure shows that the cage track 22 is distinctly narrower than the container 21 inside which the track is placed. The reason for this is that in this way a corridor 33 is formed along the entire length of the closed training space, and from this corridor the trainers can observe and instruct the training student firemen.

Figure 3 shows the fire simulator shown in figure 1 as seen from the end. Since the doors 25 and 26 of the container part 21 are open in this figure, the side corridor 33 is clearly visible in the figure. Figure 3 also shows the transfer wheel 31 of the cage track 22, the said transfer wheel being rotated by means of a hand crank 34.

Figure 4 shows a second embodiment corresponding to figure 3. In this solution the cage track 22 has not been moved inside the container at all, as in the previous example, but instead around the track curtains 35 have been placed, by means of which a corresponding closed training space is achieved.

Figures 5 and 6 show a cage track provided with curtains 35 corresponding to figure 4, that is, the smoke diving simulator as seen from the side and from above.

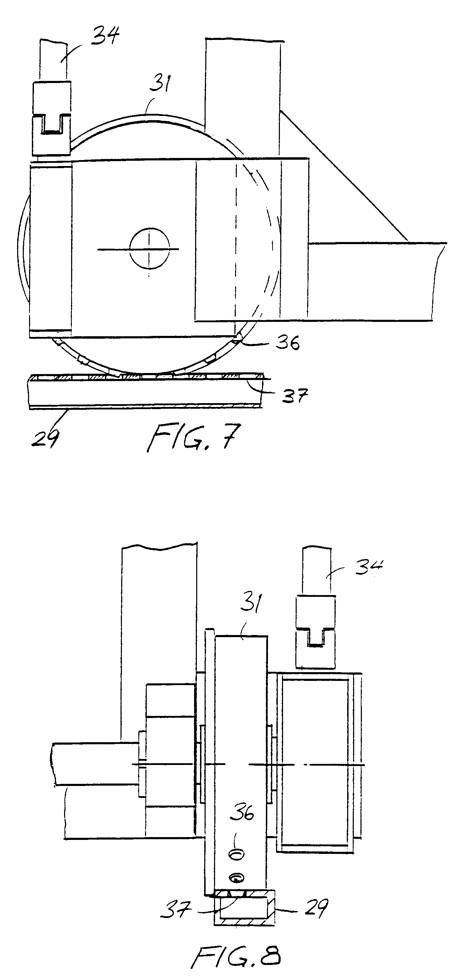

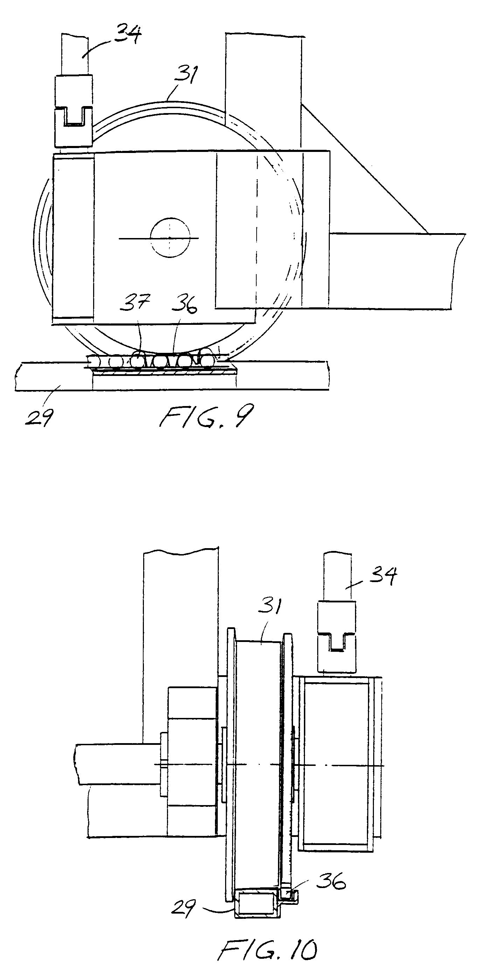

Figure 7 shows a detail of the cage track 22, that is, the middle wheel 31 on the rail 29, by means of which the cage track is moved. The figure shows that the wheel 31 has projections 36, which fit into the openings 37 in the rail 29. These pieces fitting into each other ensure the accurate movement of the cage track, also in winter when the wheel 31 is rotated by means of the hand crank 34. Figure 8 shows the wheel construction shown in figure 7 from another direction.

Figures 9 and 10 correspond to figures 7 and 8 and show a second embodiment of the wheel construction. In this solution the wheel 31 is a chain wheel provided with cogs 36 and a chain 37 is connected to the upper surface of the rail 29, which chain fits the cogs.

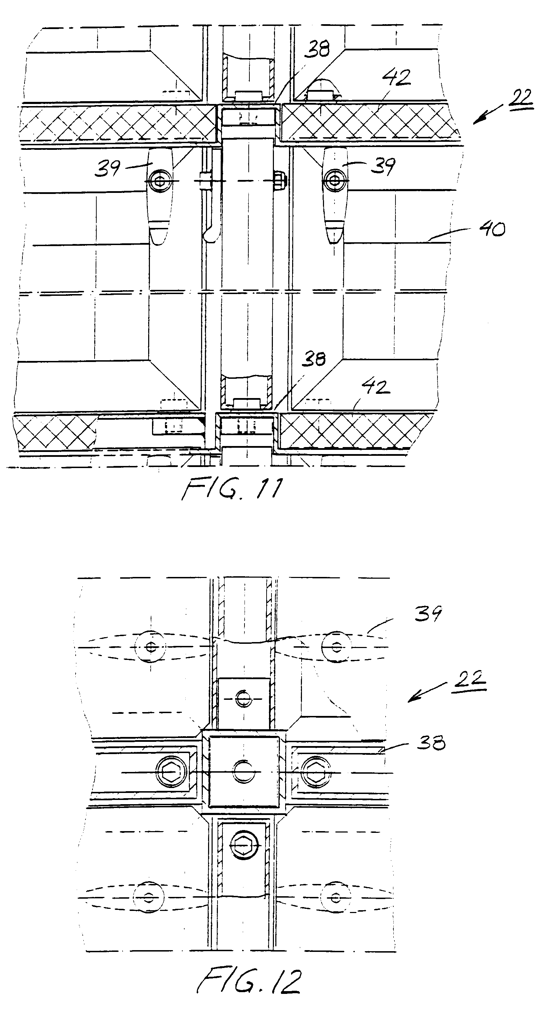

Figure 11 shows a detail of the cage construction 22 as seen from the side. The horizontal beams 38 of the frame of the construction are made of hat profile, which means that the floor elements 42 and netting frameworks 40 are easily detached in order to change the shape of the smoke diving track. Bolts 39 ensure that the elements 42 remain in place. Figure 12 shows a detail of the cage track shown in figure 11 as seen from above.

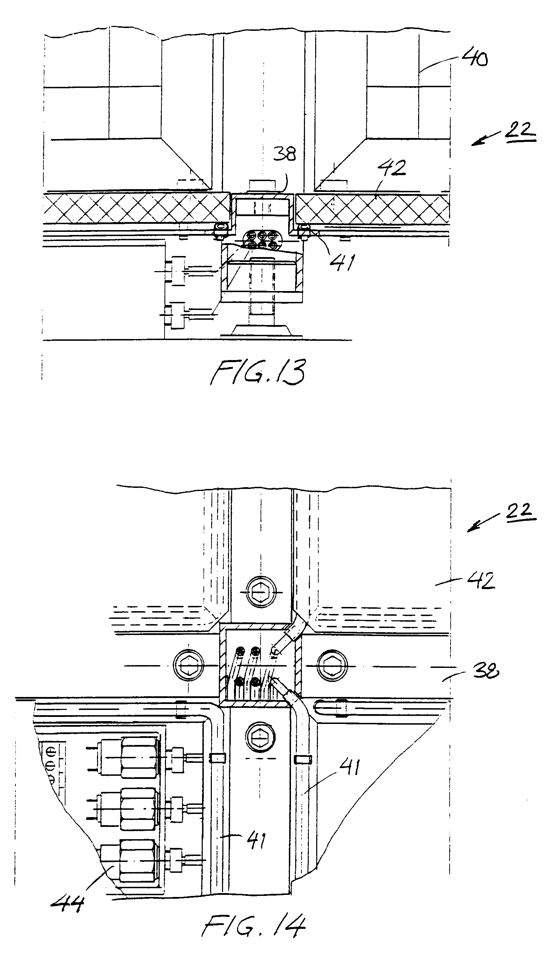

Figure 13 shows a detail of the cage track 22 corresponding to figure 11 in accordance with the second embodiment. This cage track is provided with indicators mounted in the floor, their purpose being to inform the trainer outside the track at which point on the training track the smoke diver is proceeding.

The indicator contacts are made so that under the floor element 42 is placed a rubber tube 41 which is connected to a pressure switch. When the smoke diver's weight is exerted on the floor element 42, the pressure switch 44 recognizes the pressure change in the rubber tube. This information is conveyed further electrically, for example to the illuminated display board of a control unit. Figure 14 shows correspondingly the structure of figure 13 as seen from above.

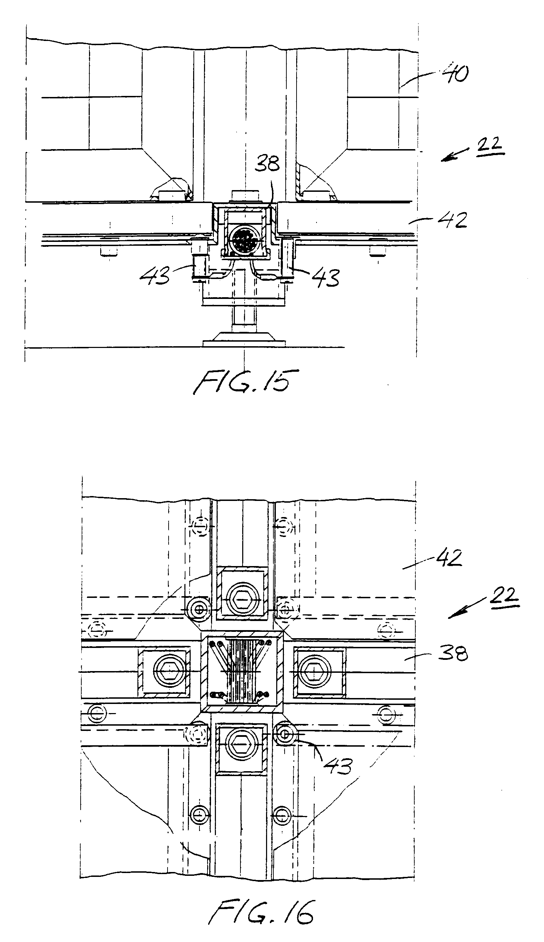

Figure 15 shows a third embodiment of the cage track 22. In this case the operation of the floor contacts indicating the position of the smoke diver has been realized electrically. In this construction the floor element 42 floats on spring ball journals 43. When the smoke diver steps on the floor element 42, it sinks in and makes an electrical contact. This information is conveyed further for example to the illuminated display board of a control unit as in the previous embodiment. Figure 16 shows a detail of figure 15 as seen from above.

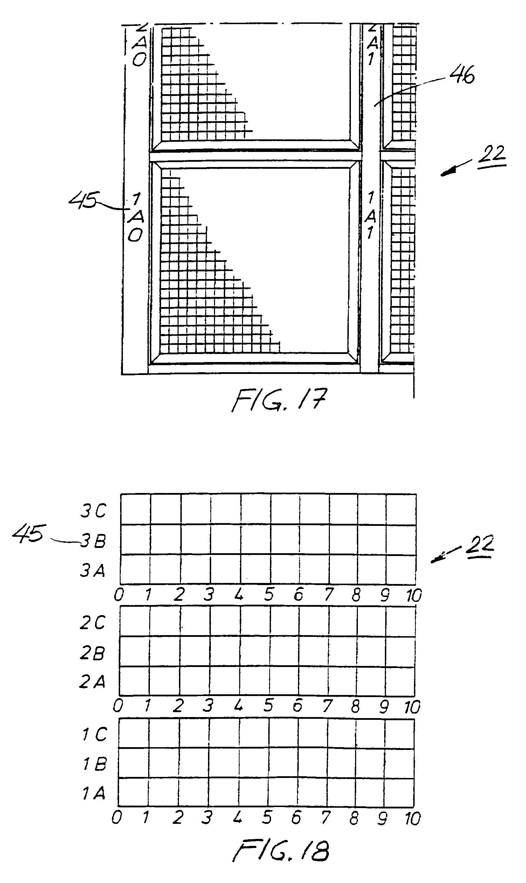

Since localizing the student or students proceeding on the smoke diving track is difficult, according to the invention, the cage track 22 is provided with identifying markings. Figure 17 shows a detail of such a cage track 22. In this case localization takes place so that an infrared camera with an illuminator is situated on the training track. The camera can be moved as the student proceeds.

When the track is followed by the camera, the position can be found out on the basis of the identifying markings marked on the track. Each cage track cube thus has its own address coordinate 45 marked on the vertical supports 46 of the cage track as shown in figure 17. The real position of the area of the cage track 22 shown in the field of view of the camera can then immediately be seen on the layout in the control room. By following the student with the camera, his position on the track is known at all times.

Figure 18 shows the marking system code of the cage construction 22 relating to the invention. There are three charts on top of each other because in this example case the cage track has three levels.

Depending on requirements, position indication on the track may be realized through both floor contacts and a camera and marking codes. These methods do not necessarily render each other unnecessary. Both are needed to guarantee safe training. This is so especially if the thickness of the smoke is raised to such a level that the penetrating capacity of the infrared camera is insufficient, in which case floor contacts are almost imperative. In addition to these, radiotelephone contact between the student and teacher can also be used.

It is obvious to one skilled in the art that the different embodiments of the invention may vary within the scope of the claims presented below.

## Claims

1. A fire simulator intended primarily for the training of firemen, the said simulator comprising a training space (21) which can be closed, which is for example a movable container, inside which it is attempted to create conditions in a training situation which are at least to some extent similar to a fire situation, whereby the fire simulator comprises at least two parts (21, 22), the first (21) of the two parts is the actual training space which can be closed, **characterized** in that the second (22) of the two parts is a separate smoke diving cage track which can be placed inside the first part during the transportation of the fire simulator, and when the object of training is smoke diving.

2. A fire simulator as claimed in claim 1, **characterized** in that the first part (21) of the fire simulator is a movable container, which is built to withstand conditions similar to different fire situations, such as the situation of extinguishing ignitable materials or the situation of extinguishing fire gases, and that the same space can be converted into a training space for smoke diving by placing a suitable, separate smoke diving cage track (22) inside the closed space.

3. A fire simulator as claimed in claim 1 or 2, **characterized** in that the first part (21) of the fire simulator is a movable apartment fire simulator or a smoke diving simulator, depending on whether the separate cage track (22) is inside it or not.

4. A fire simulator as claimed in claim 1, 2 or 3, **characterized** in that the smoke diving cage track (22) is provided with wheels (31) and that rails (29) are connected to the other end of the first part (21), that is, of the apartment fire simulator, so that the smoke diving cage track can be moved inside the apartment fire simulator through the doors (25, 26) at the end.

5. A fire simulator as claimed in any of the claims 1 to 4, **characterized** in that for moving the smoke diving cage track (22), the rail (29) and the cage track (22) wheel (31) are provided with elements (36, 37) which fit together, such as for example the cog (37) of a toothed bar and the cog (36) of a cogged wheel.

6. A fire simulator as claimed in any of the claims 1 to 5, **characterized** in that the separate cage track (22) is made narrower than the apartment fire simulator (21), whereupon a free space remains on one side of the apartment fire simulator, from which the trainer can observe the trainee on the smoke diving cage track.

7. A fire simulator as claimed in any of the claims 1 to 6, **characterized** in that the separate smoke diving cage track (22) to be placed inside the apartment fire simulator (21) is provided with floor contacts (41, 43) for determining the position of the smoke diver.

8. A fire simulator as claimed in any of the claims 1 to 7, **characterized** in that the separate smoke diving cage track (22) to be placed inside the apartment fire simulator (21) is provided with address markings (45) for determining the position of the smoke diver by means of a camera.

## Patentansprüche

1. Feuersimulator, der in erster Linie zum Training von Feuerwehrleuten beabsichtigt ist, wobei der Simulator einen Trainingsraum (21) umfaßt, der geschlossen werden kann, der beispielsweise ein bewegbarer Behälter ist, in dessen Inneren versucht wird, Bedingungen in einer Trainingssituation zu schaffen, die zumindest in einem gewissen Maß einer Brandsituation ähnlich sind, wobei der Feuersimulator zumindest zwei Teile umfaßt (21, 22), wobei das erste (21) der zwei Teile der tatsächliche Trainingsraum ist, der geschlossen werden kann,
dadurch **gekennzeichnet**, daß
das zweite (22) der zwei Teile eine getrennte Käfigbahn zum Eintauchen in Rauch ist, die während der Beförderung des Feuersimulators und wenn das Ziel des Trainings das Eintauchen im Rauch ist in den ersten Teil gestellt werden kann.

2. Feuersimulator gemäß Anspruch 1,
dadurch **gekennzeichnet**, daß
der erste Teil (21) des Feuersimulators ein bewegbarer Behälter ist, der konstruiert ist, um Bedingungen standzuhalten, die ähnlich denen verschiedener Brandsituationen sind, so wie die Situation des Löschens von Feuergasen, und daß derselbe Raum in einen Trainingsraum für das Eintauchen im Rauch umgewandelt werden kann, indem eine geeignete, getrennte Käfigbahn (22) zum Eintauchen in Rauch im Inneren des abgeschlossenen Raums untergebracht wird.

3. Feuersimulator gemäß Anspruch 1 oder 2,
dadurch **gekennzeichnet**, daß
das erste Teil (21) des Feuersimulators ein bewegbarer Wohnungsbrandsimulator oder ein Simulator zum Eintauchen in Rauch ist, in Abhängigkeit davon, ob die getrennte Käfigbahn (22) sich darin befindet oder nicht.

4. Feuersimulator gemäß Anspruch 1, 2 oder 3,
dadurch **gekennzeichnet**, daß
die Käfigbahn (22) zum Eintauchen in Rauch mit Rädern (31) versehen ist und daß Schienen (29) mit dem anderen Ende des ersten Teils (21), das bedeutet, des Wohnungsbrandsimulators verbunden sind, so daß die Käfigbahn zu Eintauchen in Rauch in das Innere des Wohnungsbrandsimulators durch Türen (25, 26) am Ende bewegt werden kann.

5. Feuersimulator gemäß einem der Ansprüche 1 bis 4,
dadurch **gekennzeichnet**, daß
zur Bewegung der Käfigbahn (22) zum Eintauchen in Rauch die Schiene (29) und das Rad (31) der Käfigbahn (22) mit Elementen (36, 37) versehen sind, die zusammenpassen wie beispielsweise ein Zahn (37) einer Zahnstange und ein Zahn (36) eines Zahnrades.

6. Feuersimulator gemäß einem der Ansprüche 1 bis 5,
dadurch **gekennzeichnet**, daß
die getrennte Käfigbahn (22) schmäler als der Wohnungsbrandsimulator (21) hergestellt wird, woraufhin ein freier Raum auf einer Seite des Wohnungsbrandsimulators verbleibt, von dem aus der Trainer den Auszubildenden auf der Käfigbahn zum Eintauchen in Rauch beobachten kann.

7. Feuersimulator gemäß einem der Ansprüche 1 bis 6,
dadurch **gekennzeichnet**, daß
die getrennte Käfigbahn (22) zum Eintauchen in Rauch, die im Inneren des Wohnungsbrandsimulators (21) plaziert werden soll, mit Bodenkontakten (41, 43) versehen ist, um die Position des in den Rauch Eingetauchten zu bestimmen.

8. Feuersimulator gemäß einem der Ansprüche 1 bis 7,
dadurch **gekennzeichnet**, daß
die getrennte Käfigbahn (22) zum Eintauchen in Rauch, die im Inneren des Wohnungsbrandsimulators (21) plaziert werden soll, mit Ortsmarkierungen (45) versehen ist, um die Position des in den Rauch Eingetauchten mit Hilfe einer Kamera zu bestimmen.

## Revendications

1. Simulateur d'incendie, destiné principalement à l'entraînement de pompiers, ledit simulateur comportant un espace d'entraînement (21) qui peut être fermé, qui est par exemple un conteneur mobile, dans lequel on tente de créer, dans une situation d'entraînement, des conditions qui sont au moins dans une certaine mesure similaires à une situation d'incendie, le simulateur d'incendie comportant au moins deux parties (21, 22), la première (21) des deux parties étant l'espace d'entraînement proprement dit, qui peut être fermé, caractérisé en ce que la seconde (22) des deux parties est une cabine d'obstacles séparée pour plongée dans la fumée, qui peut être placée à l'intérieur de la première partie pendant le transport du simulateur d'incendie et lorsque le but de l'entraînement est la plongée dans la fumée.

2. Simulateur d'incendie selon la revendication 1, caractérisé en ce que la première partie (21) du simulateur de feu est un conteneur mobile, qui est construit pour résister à des conditions similaires à différentes situations d'incendie, telles que la situation consistant à éteindre des matériaux inflammables, ou la situation consistant à supprimer des fumées d'incendie, et en ce que le même espace peut être transformé en un espace d'entraînement pour plongée dans la fumée, en plaçant une cabine d'obstacles (22) séparée pour plongée dans la fumée, appropriée, à l'intérieur de l'espace fermé.

3. Simulateur d'incendie selon la revendication 1 ou 2, caractérisé en ce que la première partie (21) du simulateur mobile d'incendie est un simulateur mobile d'incendie en forme d'appartement, ou un simulateur de plongée dans la fumée, suivant que la cabine d'obstacles (22) séparée se trouve ou non à l'intérieur de la première partie.

4. Simulateur d'incendie selon la revendication 1, 2 ou 3, caractérisé en ce que la cabine d'obstacles (22) pour plongée dans la fumée est dotée de roues (31), et en ce que des rails (29) sont reliés à l'autre extrémité de la première partie (21), c'est-à-dire le simulateur d'incendie en forme d'appartement, de sorte que la cabine d'obstacles pour plongée dans la fumée peut être amenée à l'intérieur du simulateur d'incendie en forme d'appartement en passant par les portes (25, 26) situées à l'extrémité.

5. Simulateur d'incendie selon l'une quelconque des revendications 1 à 4 caractérisé en ce que, pour déplacer la cabine d'obstacles (22) pour plongée dans la fumée, le rail (29) et la roue (31) de la cabine d'obstacles (22) sont dotés d'éléments (36, 37) qui s'ajustent l'un à l'autre, tels que par exemple la dent (37) d'un barreau denté et la dent (36) d'une roue dentée.

6. Simulateur d'incendie selon l'une quelconque des revendications 1 à 5, caractérisé en ce que la cabine d'obstacles (22) séparée est réalisée plus étroite que le simulateur d'incendie (21) en forme d'appartement, grâce à quoi il reste un espace libre d'un côté du simulateur d'incendie en forme d'appartement, par lequel l'entraîneur peut observer la personne qui s'entraîne dans la cabine d'obstacles pour plongée dans la fumée.

7. Simulateur d'incendie selon l'une quelconque des revendications 1 à 6, caractérisé en ce que la cabine d'obstacles (22) séparée pour plongée dans la fumée, à placer à l'intérieur du simulateur d'incendie (21) en forme d'appartement, est dotée de contacts au sol (41, 43) pour déterminer la position de la personne plongée dans la fumée.

8. Simulateur d'incendie selon l'une quelconque des revendications 1 à 7, caractérisé en ce que la cabine d'obstacles (22) séparée pour plongée dans la fumée à placer dans le simulateur d'incendie (21) en forme d'appartement est dotée de marquages de position (45) pour déterminer au moyen d'une caméra la position de la personne plongé dans la fumée.
